Europäisches Patentamt

European Patent Office

Office européen des brevets

(19)

(11) Publication number: **0 051 490**

**A1**

(12) **EUROPEAN PATENT APPLICATION**

(21) Application number: **81305221.4**

(22) Date of filing: **03.11.81**

(51) Int. Cl.³: **G 01 P 3/36**
**G 01 P 5/18**

(30) Priority: **04.11.80 GB 8035337**

(43) Date of publication of application:
**12.05.82 Bulletin 82/19**

(84) Designated Contracting States:
**DE FR GB SE**

(71) Applicant: **AGA NAVIGATION AIDS LIMITED**
**Beacon Works**
**Brentford Middlesex TW8 0AB(GB)**

(72) Inventor: **Spottiswoode, Nigel Lawrence**
**Melin Meloch Llanfor**
**Bela Gwynedd Wales LS23 7DP(GB)**

(74) Representative: **Wisher, Michael Frederick**
**Urquhart-Dykes & Lord 47 Marylebone Lane**
**London W1M 6DL(GB)**

(54) **A speed indicating system.**

(57) A speed indicating system includes a lamp 20 and lenses 22 and 24 to project a directional light beam 26 across a ship's path 2. An endless slide 28 extends round the lamp 20 and the lens 22. This slide has alternate red and green strips, and the slide part 30 is driven across the beam 26 between the lenses 22 and 24 by variable speed pulse motors.

When a ship is traversing the beam 26, the pilot adjusts the movement of the slide 28 until the flashing of the strips ceases. The pilot then reads out the ship's speed on a calibrated scale.

In another method, the slide 28 is driven through a sequentially repeated stepped speed range. When the ship's pilot sees a fixed light he reads the ship's speed on a visual readout.

Fig.4.

- 1 -

## DESCRIPTION

The present invention relates to a speed indicating system.

The invention is particularly concerned with, but is not restricted to, a system for indicating the "ground speed" of a ship travelling along a harbour entrance channel. In this Specification the term "ground speed" means the speed relative to the ground. It will be appreciated that the ground speed may differ from the speed relative to the water because the water may be moving due to a current or running tide.

With many harbour installations, before a ship can berth alongside a wharf or jetty it is usually necessary for the ship to negotiate the harbour entrance and then proceed along what may be a complicated approach channel to a region just outside the jetty. It will be appreciated that, particularly with very large ships such as the supertankers, it is important that the ship proceeds along the approach channel in conformity with an accurately controlled preselected ground speed profile. By "speed profile" is meant the incremental values of speeds and rates of change of speeds over a chosen time period or distance. In many cases any deviation from a preselected value of the approach ground speed profile can cause considerable error in handling the ship, and may lead to damage of the ship and the harbour installation. It is an aim of the invention to assist in reducing any such deviation, and according to one aspect of the invention there is provided a speed indicating system comprising an optical projector for transmitting a directional light beam, a slide located across the light beam, said slide having thereon alternate transversely spaced regions of a different colour or hue, and means to switch the beam on and off at selected time intervals.

According to another aspect of the invention there is provided an optical projector for transmitting a directional light beam, an endless slide having a part located across the light beam, said slide having thereon alternate transversely spaced regions of different colour or hue, drive means to move said slide part across the beam, and control means remote from the projector whereby the travel speed of said slide part across the beam can be varied.

According to a further aspect of the invention there is provided a speed indicating system comprising an optical projector for transmitting a directional light beam, an endless slide having a part located across the light beam, said slide having thereon alternate transversely spaced regions of different colour or hue, variable drive means to move said slide part across the beam at stepped increased speeds within a sequentially repeated speed range, and indicating means to provide a visual indication of each stepped speed.

Embodiments of the invention will now be described by way of example with reference to the accompanying illustrative drawings, in which:-

FIGURE 1 is a diagrammatic plan view of one speed indicating system of the invention,

FIGURE 2 is a front elevation of a slide forming part of the system of Figure 1,

FIGURE 3 is a diagrammatic plan view showing the principle of the system of Figure 1,

FIGURE 4 is a diagrammatic plan view of another speed indicating system of the invention,

FIGURE 5 is a graph illustrating one operational method of the system of Figure 4, and

FIGURE 6 is a slide to provide error compensation.

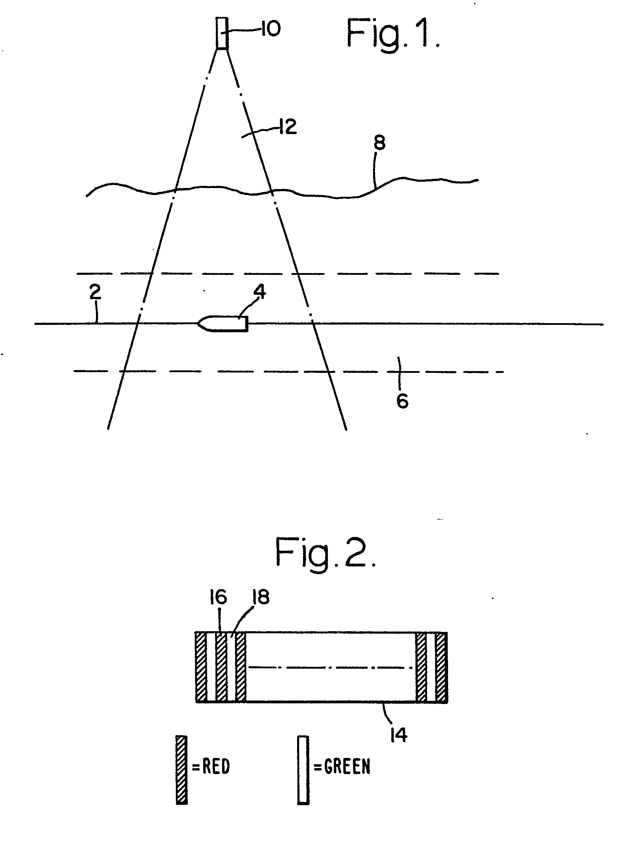

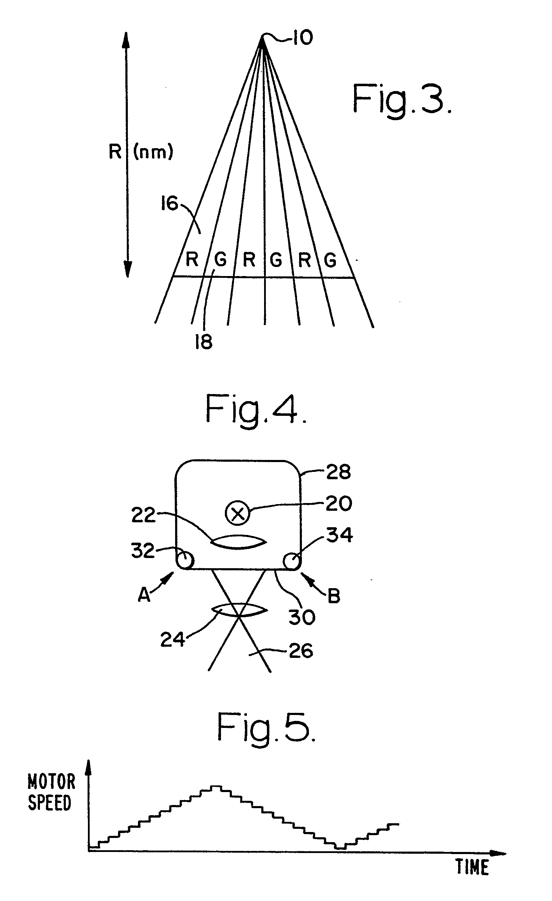

An intended track path 2 for a ship 4 passes along a dredged approach channel 6 adjacent to a shore line 8. One speed indicating system of the invention includes an optical projector 10 mounted on land adjacent to the shore line to transmit a directional light beam 12 across the channel 6 at substantially 90$^{\circ}$ to the ships track path 4. A transparent slide 14 is mounted on the projector 10 to extend across the light beam 12 immediately in front of the objective lens of the projector 10. The slide 14 is divided into transversely spaced alternate red and green strips 16 and 18 respectively. When the slide 14 is in position in the projector 10, these red and green strips 16 and 18 are vertical and are spaced transversely across the light beam 12 as illustrated in Figure 2. Referring to Figure 3, it will be appreciated that when a ship 4 travels along the track path 2 it will see red and green light alternately, the number of colour-changes being observed in a given time being a direct indication of the ships speed.

A ship 4 travelling along the track path 2 at right angles to the axis of the light beam 12, and at a known distance from the projector 10 can ascertain its speed by one of the two following methods:-

(a) the time intervals between successive colour changes can be timed, or

(b) the number of colour changes observed in a specified time interval can be counted.

In practice, the red and green strips 16 and 18 are made extremely narrow so that there will be 200 or more alternately coloured strips extending across the light beam 12.

Referring to Figure 3, let the width of each projected sector equal Ra, where R is the distance from the projector 10 to the ship 4 at the centre of the beam 12, and $\underline{a}$ is a constant depending on the width of the strips 16 and 18 and the focal length of the objective lens on the projector 10.

As an example, if R equals 1 nautical mile and $a$ equals 0.0008333, then the number of colour changes in any interval of 30 seconds will be 10 times the ship's speed in knots.

In practice the aforementioned method is not acceptable because ships pilots do not carry stopwatches. However, the time interval referred to in the aforementioned method (b) can be built into the projector 10 by occulting i.e. switching off the projector 10 at appropriate intervals. For example, with the values of Ra given in the aforementioned method (b), if the projector 10 is on for 30 seconds and then off for a few seconds and if the mariner counts the number of colour changes between successive dark intervals, and divides this number by 10, this will give the ships speed in knots. By changing the constant $a$ i.e. the width of the beam colour sectors, or the occulting time, the read-out can be in other units i.e. kilometers per hour, feet per minute etc.

Referring particularly to Figure 3, if the ships speed is x knots, the time taken to traverse each segment is $\frac{Ra}{x}$ hours $= \frac{3600\ Ra}{x}$ seconds.

The time to traverse 10x segments $= 36000$ Ra seconds. This is the occulting period to give 10x flashes for a speed of x knots.

For example, if R = 1 nautical mile; $a$ = 0.0008333 then the occulting time = 30 seconds.

The same result can also be achieved by adjusting a (the width of the strips 16 and 18) to suit a particular R.

It will be appreciated that if the ship 4 is travelling at an angle to the correct track path 2 then an error will be introduced into the aforementioned calculations. This error is proportional to the cosine of the angle of the ships actual path to the theoretical correct path 2.

Referring particularly to Figure 4, another system of the invention includes a high powered lamp 20, a condensor lens 22 and an objective lens 24 to project a directional light beam 26 across a ship's track path 2. An endless transparent slide 28, of the same construction as the slide 14, extends round the lamp 20 and the condensor lens 22. A part 30 of this slide is driven across the beam 26 between the lenses 22 and 24 by means of sprockets 32 and 34. These sprockets 32 and 34 are driven by variable speed pulse motors. When the slide part 30 is travelling from left to right then sprocket 34 drives and the sprocket 32 acts as a damper; and vice versa when the slide part 30 is travelling from right to left.

In one method of operating this system it is necessary for the ship's pilot to be able to control the direction and speed of the slide 28. When the ship 4 is traversing the beam 12, the pilot adjusts the speed and direction of movement of the slide 28 until the flashing of the red and green strips 16 and 18 ceases. In this situation the pilot sees a steady light which will be either red or green. The pilot then reads out the ship's speed on a calibrated scale which is part of the pilot's speed adjusting device.

Another method of operating this system does not require the slide speed to be controlled from the ship, but does require a visual speed readout mounted near the shore and connected by cable to the beam projector. This readout must be sufficiently large to be readily visible from the ship 4, and preferably would comprise two digits with a decimal point between them.

The sprockets 32 and 34 are controlled to drive the slide 28 through a sequentially repeated range of speeds. Referring to Figure 5, the drive speed is stepped so that each vertical step corresponds to a ship's speed of 0.1 knots, and each time step is approximately 1 second so that the time to sweep from 0. to 5 knots would be 50 seconds. Each change of speed automatically shifts the visual readout to indicate the appropriate ships speed. In operation, the ships pilot watches the light beam 12, and when he sees a fixed light either red or green he then reads the visual readout which indicates the ships speed at that instant.

If it is desired to indicate the speed of ships travelling in either direction then it is necessary to reverse the direction of the slide 28. It will be appreciated that with the two aforementioned methods the beam 12 is not occulted i.e. switched on and off sequentially while the ship 4 traverses the beam 12.

Referring to the method described in relation to the system of Figure 1 it will be appreciated that the beam 12 has to be occulted while the ship 4 traverses the beam. When operating this method with a relatively fast ship the problem arises that the pilot has to count a fairly high number of red and green flashes during the short time interval in which the beam 12 is switched on. A method of operating the system of Figure 4 to alleviate this problem will now be described. With this method it is necessary for the lamp 20 to be occulted and for the lamp 20 to be controlled from a control point such as for example a harbour communication centre. In operation, a ship wishing to have its speed indicated informs the communication centre in advance which direction the ship 4 will be crossing the beam 12, and the pilot gives his estimated speed to the nearest one knot. When giving his estimated speed it is essential that he must underestimate his speed. The communication centre sets the slide 28 running in the correct direction and at a speed corresponding to the nearest whole number of knots below the ships estimated speed. For example, if the ship were doing approximately 1.5 knots, and if the slide 28 was set to run at a speed corresponding to one knot, then if the ships true speed was in fact 1.3 knots the pilot would see a series of 3 flashes while the beam 12 was switched on between each dark period. In consequence, the pilot will only have to count 3 flashes instead of 13.

There could be ambiguity if the pilot had seriously misjudged the ships speed, and if the ships true speed was less than the speed indicated by the slide 28. In the aforementioned example, the pilot would see the same signal of 3 flashes between each dark period if the ships true speed were 0.7 knots. This problem could be overcome by making the slide 28 with a three colour sequence of stripes i.e. white, red and green for example. With this arrangement the pilot would know that if white was followed by red then he must add the indicated speed to the set speed, whereas if white were followed by green then he must subtract the indicated speed from the set speed.

Referring to Figures 1 and 3, it will be seen that errors in the indicated speed will occur if the vessel departs laterally from its intended track. These errors are proportional to the ratio of the ships' lateral error to the distance from the ship to the projector. These errors can be minimised by placing the projector as far as practical from the ships' intended track. Variations in the height of the observers' eyes (due to rise and fall of tide and to differing bridge heights) will not effect the indicated speed. It is possible to reduce or eliminate the errors due to lateral movement of the vessel by a method described in the next paragraph.

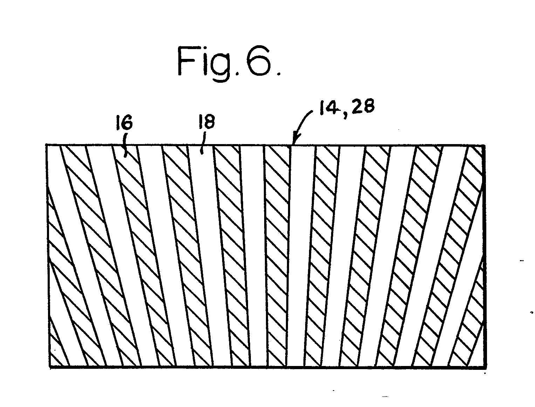

It is proposed that the slide 14 or 28 be made photographically from a large master art work. By photographing this art work from different distances, variations in the constant (a) can be made to suit different distances between the projector and the ship's track path 2. (This can also be done by changing the occulting period). By photographing the art work from an angle, i.e. by angling the art work in relation to the camera axis, slides such as indicated in Figure 6 can be made to eliminate errors due to lateral changes of the ship. However this type of slide will introduce errors due to variations in the observers' height relative to the projector. By varying the angling of the art work it is possible to make a compromise between errors due to lateral and vertical changes of the observers' eyes.

CLAIMS

1. A speed indicating system comprising an optical projector for transmitting a directional light beam, a slide located across the light beam, said slide having thereon alternate transversely spaced regions of a different colour or hue, and means to switch the beam on and off at selected time intervals.

2. A speed indicating system comprising an optical projector for transmitting a directional light beam, an endless slide having a part located across the light beam, said slide having thereon alternate transversely spaced regions of different colour or hue, drive means to move said slide part across the beam, and a control means remote from the projector whereby the travel speed of said slide part across the beam can be varied.

3. A speed indicating system comprising an optical projector for transmitting a directional light beam, an endless slide having a part located across the light beam, said slide having thereon alternate transversely spaced regions of different colour or hue, variable drive means to move said slide part across the beam at stepped increased speeds within a sequentially repeated speed range, and indicating means to provide a visual indication of each stepped speed.

4. A system as claimed in Claim 3, in which the drive means is arranged so that each speed step corresponds to a speed of one knot.

5. A system as claimed in Claim 4, in which the drive means is arranged so that each time step is approximately one second.

6. A system as claimed in any preceding Claim arranged so that at least 200 regions of the slide are located in the light beam.

7.    A system as claimed in Claim 2 or Claim 3 in which the drive means comprises at least one variable speed pulse motor.

8.    A system as claimed in Claim 7, in which the drive means further comprises a driving sprocket and a damper sprocket.

9.    A system as claimed in Claim 3, in which the indicating means is digital.

10.    A system as claimed in any one of Claims 2 to 9 in which the drive means is reversible.

11.    A system as claimed in Claim 3 in which the slide has thereon transversely spaced regions in a sequence of 3 different colours or hue.

12.    A method of operating the system of Claim 3 to indicate the speed of a vehicle, said method comprising driving the slide in the same direction as the vehicle and initially at a slightly lower speed than the vehicle, and switching the beam on and off at selected time intervals.

Fig.1.

Fig.2.

=RED    =GREEN

Fig.3.

R (nm)

16

| R | G | R | G | R | G |

18

Fig.4.

28

20

22

32

34

A

B

30

24

26

Fig.5.

MOTOR
SPEED

TIME

Fig.6.

0051490

**European Patent Office**

**EUROPEAN SEARCH REPORT**

Application number

EP 81 30 5221

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | CH - A - 445 164 (MARCONI)<br><br>* Column 1 - column 2, line 8; figure 1; principal claim * | 1-3 | G 01 P 3/36<br>5/18 |
| | FR - A - 2 081 922 (GENERAL ELEC-TRIC)<br><br>* Page 1, lines 1-14; claim 1; figures 1,2a,3 * | 1-3 | |
| | JOURNAL OF SCIENTIFIC INSTRUMENTS (JOURNAL OF PHYSICS E), 1968, Series 2, vol. 1, no. 1, January 1968, pages 25-28<br>W.O. AGAR et al.: "An optical method of measuring transverse surface velocity"<br><br>* Paragraph 2; figure 1 * | 1-3 | TECHNICAL FIELDS SEARCHED (Int.Cl. 3)<br><br>G 01 P 3/00<br>3/36<br>3/54<br>3/64<br>3/68<br>5/00<br>5/18 |
| | US - A - 3 006 235 (BRANDON)<br><br>* Figure 1; column 1 - column 2, line 20 * | 1-3 | |
| | GB - A - 25 487 (GREIG)<br><br>* Page 1, lines 4-8; figures * | 1-3 | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| The present search report has been drawn up for all claims | | |
|---|---|---|
| Place of search<br>The Hague | Date of completion of the search<br>28-01-1982 | Examiner<br>HANSEN |

EPO Form 1503.1   06.78